(19) Europäisches Patentamt
European Patent Office
Office européen des brevets

(11) **EP 4 060 938 B1**

(12) **EUROPÄISCHE PATENTSCHRIFT**

(45) Veröffentlichungstag und Bekanntmachung des Hinweises auf die Patenterteilung:
**07.05.2025 Patentblatt 2025/19**

(21) Anmeldenummer: **22162743.3**

(22) Anmeldetag: **17.03.2022**

(51) Internationale Patentklassifikation (IPC):
***H04L 9/40*** *(2022.01)*

(52) Gemeinsame Patentklassifikation (CPC):
**H04L 63/1491**

(54) **VERFAHREN FÜR DIE VERBESSERUNG DER SICHERHEIT IN EINEM ELEKTRONISCHEN KOMMUNIKATIONSNETZ**

METHOD FOR IMPROVING SECURITY IN AN ELECTRONIC COMMUNICATION NETWORK

PROCÉDÉ D'AMÉLIORATION DE LA SÉCURITÉ DANS UN RÉSEAU ÉLECTRONIQUE DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **19.03.2021 DE 102021106823**

(43) Veröffentlichungstag der Anmeldung:
**21.09.2022 Patentblatt 2022/38**

(73) Patentinhaber: **Cybersense GmbH**
**44227 Dortmund (DE)**

(72) Erfinder: **STURHAN, Ralf**
**44265 Dortmund (DE)**

(74) Vertreter: **Schneiders & Behrendt Bochum**
**Gerard-Mortier-Platz 6**
**44793 Bochum (DE)**

(56) Entgegenhaltungen:
**CN-A- 111 371 758**

• **MENGMENG GE ET AL: "Proactive Defense for Internet-of-Things: Integrating Moving Target Defense with Cyberdeception", ARXIV.ORG, CORNELL UNIVERSITY LIBRARY, 201 OLIN LIBRARY CORNELL UNIVERSITY ITHACA, NY 14853, 8 May 2020 (2020-05-08), XP081670976**
• **ANWAR AHMED H ET AL: "Game Theory on Attack Graph for Cyber Deception", 22 December 2020, ARXIV.ORG, PAGE(S) 445 - 456, XP047573775, DOI: 10.1007/ 978-3-030-64793-3_24**
• **MU ZHU ET AL: "Game-Theoretic and Machine Learning-based Approaches for Defensive Deception: A Survey", ARXIV.ORG, CORNELL UNIVERSITY LIBRARY, 201 OLIN LIBRARY CORNELL UNIVERSITY ITHACA, NY 14853, 21 January 2021 (2021-01-21), XP081866790**

**Beschreibung**

Die Erfindung betrifft ein Verfahren für die Verbesserung der Sicherheit in einem elektronischen Kommunikationsnetz unter Verwendung der Deception-Technologie, bei dem Lures und Decoys im Kommunikationsnetz verteilt werden, um einen Angreifer im Kommunikationsnetz zu detektieren.

Solche Verfahren, die die sogenannte Deception-Technologie einsetzen, dienen zur Abwehr und Erkennung von Cyberangriffen. Ziel ist es, Angreifer mittels Köder (Lures oder auch Breadcrumbs genannt) in Fallen (Decoys) zu locken. Hierbei ist ein Angreifer bereits erfolgreich in ein Netzwerk eingedrungen, hat Persistenz erreicht und unter Umständen schon die Kontrolle über ein oder mehrere Geräte erlangt. Der erfolgte Angriff konnte aber nicht mit anderen Methoden festgestellt und lokalisiert werden. Wird nun die Benutzung der Lures oder eine Interaktion mit den Decoys festgestellt, kann der Angriff erkannt und lokalisiert werden. Ein solches Verfahren ist beispielsweise aus der Druckschrift US 9,807,115 B2 bekannt.

Es existieren eine Vielzahl möglicher Decoys und Lures sowie Möglichkeiten der Verteilung dieser, eingeschränkt nur durch den Erfindungsreichtum des Verteidigers und die Gegebenheiten des zu verteidigenden Kommunikationsnetzes. Decoys können beispielsweise Dienste, Serversysteme oder Industriesteuerungen darstellen. Lures können u.a. Active Directory Objekte (GPOs, SPNs, Konten), Cookies, gespeicherte Zugangsdaten oder Zertifikate sein.

Im Stand der Technik fehlt jedoch ein systematischer Ansatz, welche Decoys und Lures sinnvollerweise auszuwählen und wo diese zu platzieren sind. Wichtig ist auch die Veränderung, die sich durch Auswahl und Platzierung der Decoys und Lures ergibt, bewerten zu können. Wenn sich der Grad der Verbesserung zwischen dem Zustand vor und nach Ausbringung einer möglichen Variante an Decoys und Lures im Hinblick auf das angestrebte Ziel messen lässt, kann eine sinnvolle Auswahl zwischen den Varianten getroffen werden.

Beides - eine Systematik für die Auswahl und Platzierung sowie die Bewertbarkeit - sind entscheidende Voraussetzungen, die Aufgabe in ein Optimierungsproblem zu überführen, welches sich mathematischen Lösungsansätzen, Machine-Learning-Algorithmen oder generativer Programmierung erschließt.

Es ist daher die Aufgabe der Erfindung, eine Systematik für die Auswahl und Platzierung von Lures und Decoys bereitzustellen, durch die die Lures und Decoys in möglichst optimaler Weise im Kommunikationsnetz verteilt werden, um einen Angriff möglichst effektiv zu detektieren.

Hierzu schlägt die Erfindung ausgehend von einem Verfahren der eingangs genannten Art vor, dass

- ein Angriffsvektor auf das Kommunikationsnetzwerk ermittelt wird,

- ein Angriffsgraph basierend auf dem Angriffsvektor erstellt wird, welcher mögliche Angriffspunkte darstellt und Angriffswege als azyklischen, also kreisfreien, gerichteten Graphen mit mindestens einer das Angriffsziel darstellenden Senke und mindestens einer den Angriffspunkt darstellenden Quelle abbildet,

- die Art und die Anzahl von Lures und Decoys basierend auf der Struktur des Angriffsgraphen bestimmt werden und

- die Lures und die Decoys unter Verwendung einer Zielfunktion im Kommunikationsnetz verteilt werden, wobei die Zielfunktion folgende Vorgaben berücksichtigt:

    a) kürzere Pfade zu dem Angriffsziel oder den Angriffszielen des Angriffsgraphen sind für Angreifer besonders attraktiv,

    b) auf möglichst vielen Pfade zu dem Angriffsziel oder den Angriffszielen des Angriffsgraphen ein Decoy platziert ist,

    c) die Lures und Decoys sind möglichst nah an den Angriffspunkten des Angriffsgraphen angeordnet,

- wobei durch die Verteilung der Lures und Decoys ein neuer Angriffsgraph gebildet wird und

- wobei anschließend der ursprüngliche Angriffsgraph mit dem neu gebildeten Angriffsgraphen verglichen wird und die Veränderung bewertet wird.

Beim erfindungsgemäßen Verfahren wird also erstmals die Deception-Technologie angewendet, um auf Basis von einem zuvor gebildeten Angriffsgraphen Lures und Decoys optimiert auszuwählen und zu verteilen.

Der Angriffsgraph wird hierbei als azyklischer, gerichteter Graph modelliert, dessen Senken das Ziel des Angreifers sind.

Die Verteilung von Decoys und Lures in der zu schützenden Umgebung verändert den ursprünglichen Angriffsgraphen. Eine Verbesserung im Sinne des Verteidigers ist erreicht, wenn die möglichen Wege im neuen Angriffsgraphen nun früher, schneller und öfter über Lures und Decoys führen und somit den Angriff frühzeitiger und zuverlässiger erkennbar machen. Der Grad der Verbesserung ergibt sich aus dem Vergleich des ursprünglichen Angriffsgraphen und dem durch die Ausbringung der Lures und Decoys verändertem Angriffsgraphen. Der dabei ermittelte Wert der Zielfunktion ist ein Maß für die Verbesserung und macht unterschiedliche Lösungen vergleich- und bewertbar.

Eine Weiterbildung des erfindungsgemäßen Verfahrens sieht vor, dass mindestens zwei Angriffsvektoren festgelegt werden, aus denen jeweils ein Angriffsgraph erstellt wird und die Platzierung der Lures und Decoys in den jeweiligen Angriffsgraphen überlagert werden. Hierdurch können verschiedene Arten von Angriffen berücksichtigt werden. Gleichzeitig werden gemeinsame Strukturen bei der Platzierung ausgenutzt und Redundanz vermieden. Die Detektion des Angriffs wird hierdurch noch effektiver.

Zusätzlich ist es von Vorteil, wenn die Komplexität der Ausbringung von Lures und Decoys als weitere Vorgabe in der Zielfunktion genutzt wird. Die Platzierung der Lures und Decoys im Netzwerk ist unterschiedlich technisch aufwendig. Daher gehen mit unterschiedlichen Platzierungen auch unterschiedliche Kosten einher. Die Kostenoptimierung findet somit in der Zielfunktion ebenfalls Beachtung.

Eine besonders zweckmäßige Weiterbildung der Erfindung sieht vor, dass Machine-Learning-Verfahren bei der Durchführung des Verfahrens eingesetzt werden. Durch diese Maßnahme lässt sich die Verteilung der Lures und Decoys kontinuierlich und automatisiert verbessern. Der Einsatz von Machine-Learning-Verfahren unter Verwendung statistischer Verfahren wird durch die erfindungsgemäße Bewertbarkeit der Ergebnisse ermöglicht.

Die Erfindung wird im Folgenden anhand der Zeichnungen näher erläutert. Es Zeigen :

Figur 1:    ein schematisches Ablaufdiagramm des erfindungsgemäßen Verfahrens in einem Ausführungsbeispiel;

Figur 2:    schematisch einen Angriffsgraphen vor Ausbringung der Lures der Decoys;

Figur 3:    schematisch den Angriffsgraphen aus Figur 2 nach Verteilung der Lures der Decoys in einer ersten Variante.

Figur 4:    schematisch den Angriffsgraphen aus Figur 2 nach Verteilung der Lures der Decoys in einer zweiten Variante.

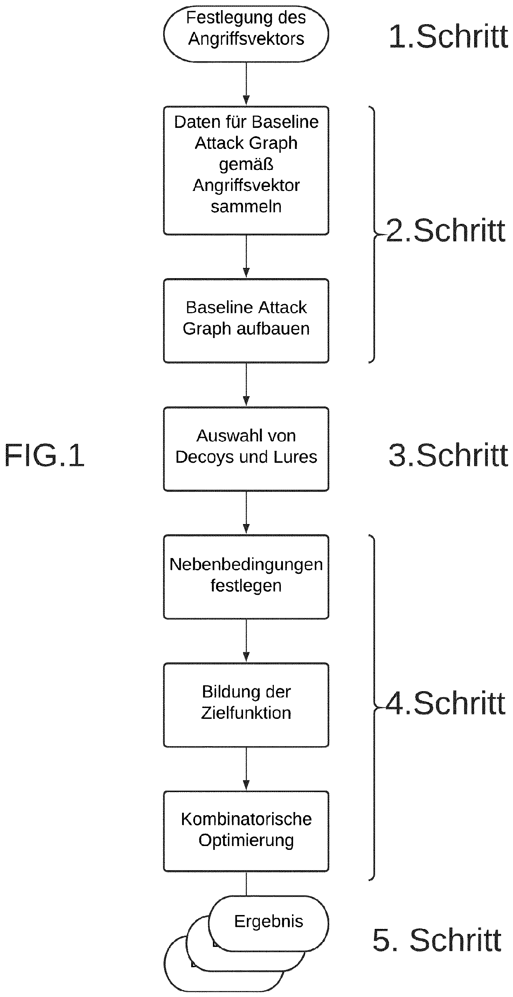

In Figur 1 ist dargestellt, wie durch das erfindungsgemäße Verfahren anhand mathematischer Methoden am Beispiel der Graphentheorie systematisch die Art, Anzahl, Platzierung von Decoys und Lures festgelegt, bewertet und optimiert werden kann.

Der Weg des Angreifers entlang seines Angriffsvektors kann als Pfad entlang der Kanten (zum Teil Lures) und Knoten (zum Teil Decoys) eines Graphen aufgefasst werden. Wobei sich die Natur der Kanten (Netzwerkverbindungen, Pipes, Rechtebeziehungen, o.Ä.) und Knoten (Systeme, Dienste, o.Ä.) aus dem Angriffsvektor ergibt. Modelliert werden diese Wege als Angriffsgraphen. Bisher sind diese Angriffsgraphen zwar schon zur Analyse und Identifikation wünschenswerter Konfigurationsänderungen verwandt worden (vgl. beispielsweise "P. Ammann, D. Wijesekera and S. Kaushik, "Scalable, Graph-Based Network Vulnerability Analysis," ACSAC, 2002"), aber noch nicht auf das Problem der Auswahl und Platzierung von Decoys und Lures bzw. der Deception-Technologie im Allgemeinen angewandt worden.

1. Schritt: Festlegung des Angriffsvektors

In einem ersten Schritt des erfindungsgemäßen Verfahrens wird ein Angriffsvektor festgelegt. Die Aktivitäten eines Angreifers lassen sich in die Kategorien Aufklärung (Reconnaissance), Planung (Plan) und Aktion (Act) aufteilen. Dabei ist die Reihenfolge nicht entscheidend und alle Phasen können mehrfach durchlaufen werden. Die in den Aufklärungsphasen gefundenen Informationen beeinflussen dabei die Art und den gewählten Weg des Angriffs - den sogenannten Angriffsvektor. Die Aufgabe der Deception-Technologie ist es, die gefundenen Informationen passend zum Angriffsvektor so zu beeinflussen, dass der gewählte Weg möglichst frühzeitig über ein Decoy führt oder eine Information aus einem Lure verwendet wird, deren Benutzung anderweitig festgestellt werden kann.

2. Schritt: Bildung des Angriffsgraphen

Um später eine Veränderung feststellen und beurteilen zu können, werden im zweiten Schritt des erfindungsgemäßen Verfahrens Angriffsgraphen unter Berücksichtigung der Angriffsvektoren für die bestehende Umgebung vor Ausbringung von Decoys und Lures erstellt. Dies kann am Beispiel der bekannten "Identity Snowball"-Attacken (vgl. beispielsweise "P. Ammann, D. Wijesekera and S. Kaushik, "Scalable, Graph-Based Network Vulnerability Analysis," ACSAC, 2002") verdeutlicht werden. Dabei erlangt ein Angreifer höhere Rechte indem er schrittweise neue Identitäten annimmt und ausnutzt, um weitere Rechner und Identitäten zu kompromittieren. Diese Angriffstechnik ist seit vielen Jahren ein wesentliches Werkzeug für menschliche Angreifer (APTs) und automatisierte Attacken mit Malware (Emotet/Trickbot). Wichtig hierbei ist es, dass diese Angriffstechnik nicht auf der Ausnutzung von Programmierfehlern beruht, die mit einem Patch geschlossen werden könnten, sondern sich grundsätzliche Mechaniken von Systemen wie Microsofts Active Directory, Kerberos oder NTLM zu Nutze macht und mit herkömmlichen Mitteln nur schwer zu detektieren ist. Sie stellt ein wichtiges Einsatzgebiet für die Deception-Technologie dar. Ausgehend vom Angriffsvektor lässt sich die bestehende Umgebung in einem Angriffsgraphen darstellen, in dem die Knoten Domänen, Benutzerkonten, Computer, Gruppen, Gruppenrichtlinien und organisatorische Einheiten repräsentieren und die gerichteten Kanten Rechtebeziehungen und aktive Sitzungen (AdminTo, TrustedBy, HasSession, GenericAll, AllExtendedRights, AllowedtoDelegate, Owns, GetChangesAll, etc.) darstellen. Für die Datensammlung, Aufbau und Speicherung eines solchen Angriffsgraphen existieren etablierte Tools (vgl. beispielsweise R. Vazarkar, S. Heiniger und nikallass, "SharpHound3," [Online]. Available: https://github.com/BloodHoundAD/SharpHound3). Ihre hohe Relevanz ergibt sich auch aus dem Grad ihrer Verbreitung bei Angreifern und Sicherheitsexperten.

Für das Beispiel des "Identity Snowball"-Angriffs (s.o.) mit dem Ziel höchste Rechte in der angegriffenen Struktur zu erlangen, wird aus den gewonnenen Daten zunächst ein azyklischer, gerichteter Graph gebildet, dessen Senken die Gruppe der "Domänen Administratoren" ist. Die Quellen des Graphen stellen mögliche Angriffspunkte dar. Die Wege von den Quellen zu den Senken stellen die möglichen Angriffswege dar. Angreifer benutzen Tools wie "BloodHound" (vgl. A. Robbins, R. Vazarkar und W. Schroeder, "BloodHound," [Online]. Available: https://github.com/BloodHoundAD/Blood Hound), um solche azyklischen, gerichteten Graphen zu bilden und optimale Angriffswege zu finden.

3. Schritt: Auswahl der Lures und Decoys

So wie der Angriffsvektor das Schema des Angriffsgraphen vorgibt, bestimmt das Schema des Angriffsgraphen die Auswahl an Decoys und Lures. Am Beispiel des "Identity Snowball"-Angriffsvektors (s.o.) sind die Decoys Computer und die Lures Benutzerkonten, Computer, Gruppen, Gruppenrichtlinien und organisatorische Einheiten, die so konfiguriert sind, dass sie geeignet sind, den Aufbau des Angriffsgraphen zu verändern. Andere Decoys und Lures werden für diesen speziellen Angriffsvektor nicht berücksichtigt.

4. Schritt: Bildung der Parameter der Zielfunktion

Um die optimale Platzierung von Decoys und Lures zu finden, werden Methoden der kombinatorischen Optimierung angewandt, die aus der Menge der möglichen Verteilungen, diejenigen mit optimalem Zielfunktionswert auswählen. Als Vorgaben werden dabei in diesem Ausführungsbeispiel u.a. Obergrenzen an Anzahl von Decoys und Lures im Verhältnis zur Größe und Komplexität der zu schützenden Zielumgebung berücksichtigt.

Durch die Ausbringung von Decoys und Lures werden diese Bäume verändert. Erfindungsgemäß ist das Ziel, den Weg des Angreifers über eines der ausgebrachten Decoys zu führen und damit den Angriff zu detektieren. Die Zielfunktion berücksichtigt hierbei daher die folgenden Vorgaben:

- Für den Angreifer sind kürzere Pfade attraktiver. Jeder zusätzliche Knoten erhöht den Aufwand und die Gefahr der Entdeckung.

- Nicht alle Kanten (Lures) haben die gleichen Kosten. Der Weg über eine Kante kann danach gewichtet werden, wie technisch einfach er für einen Angreifer zu beschreiten und mit welchem Detektionsrisiko er verbunden ist.

- Je attraktiver ein Pfad, desto wichtiger ist es, dass er über einen Decoy oder ein detektierbares Lure führt.

- Es sollten möglichst viele Pfade über einen Decoy oder ein detektierbares Lure führen (gewichtet nach der Attraktivität der Pfade).

- Je früher (d.h., je näher am einem Angriffspunkt) ein Decoy oder ein detektierbares Lure platziert ist, desto besser.

Anhand des Zielfunktionswerts können die einzelnen Angriffsgraphen und die ihnen zugrunde liegenden Verteilungen von Decoys und Lures bewertet und verglichen werden. Mittels einer geeigneten, dem Fachmann prinzipiell bekannten Methode der kombinatorischen Optimierung wird eine optimale Lösung gefunden.

Das Design der Heuristik und der Annäherungsalgorithmen zur Lösung des Optimierungsproblems wird in einer Weiterbildung der Erfindung durch den Einsatz von Machine-Learning unterstützt bzw. automatisiert. Aktuelle Forschung legt nahe, dass das für wiederkehrende Aufgaben mit unterschiedlichen aber ähnlich strukturierten Daten möglich ist (vgl. R. Ancarani, "Not All Paths are Created Equal, Attackers' Economy (Part 1)," 08 11 2019. [Online]. Available: https://

riccardoancarani.github.io/2019-11-08-not-all-paths-are-equal/).

5. Schritt: Überlagerung und Ergebnis

Angriffsgraphen können zur Modellierung einer Vielzahl möglicher Angriffsvektoren benutzt werden und damit als Grundlage für die optimierte Auswahl und Verteilung von Decoys und Lures dienen. Damit lässt sich die oben beschriebene Vorgehensweise auch auf andere denkbare Angriffsvektoren anwenden und jeweils eine optimierte Teillösung finden. Die Teillösungen werden anschließend zu einer Gesamtlösung überlagert.

Das durch die Überlagerung gefundene Gesamtergebnis ist eine multidimensional optimierte Verteidigung auf Basis der Deception-Technologie.

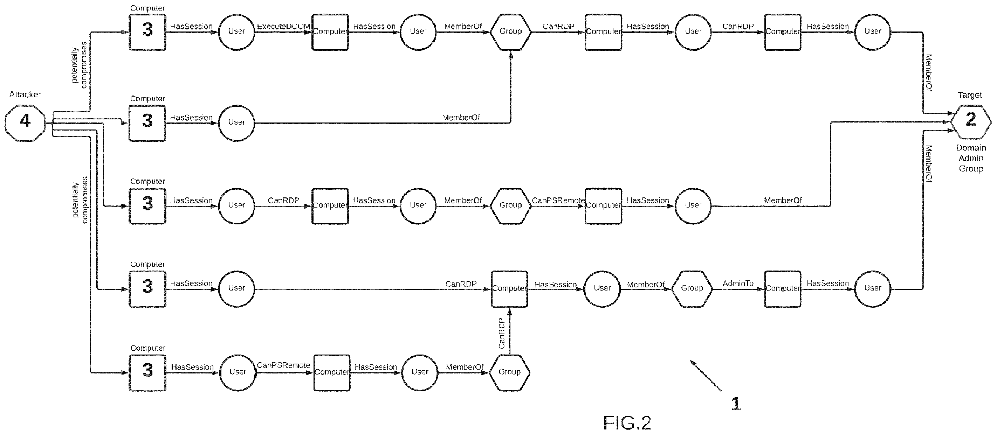

In Figur 2 ist ein vereinfachter Angriffsgraph dargestellt und in seiner Gesamtheit mit dem Bezugszeichen 1 bezeichnet. Dieser wurde wie oben beschrieben nach dem erfindungsgemäßen Verfahren erstellt, nachdem der Angriffsvektor ermittelt wurde. Der Angriffsgraph ist als azyklischer, gerichteter Graph dargestellt, bei dem eine Senke 2 die Gruppe der Domänen Administratoren ("Domain Admin Group") das Angriffsziel des potentiellen Angreifers 4 darstellt. Quellen 3 stellen mögliche Angriffspunkte für den potentiellen Angreifer dar. Dies sind beispielsweise Computer in dem modellierten Netzwerk. Die Senke 2 ist ausgehend von den Quellen 3 über Knoten und Kanten (dargestellt durch Richtungspfeile) zu erreichen.

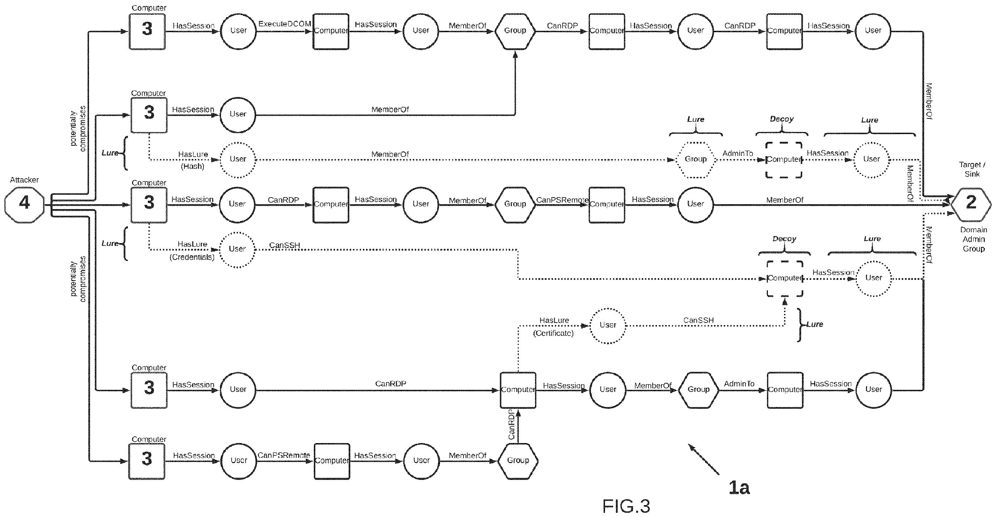

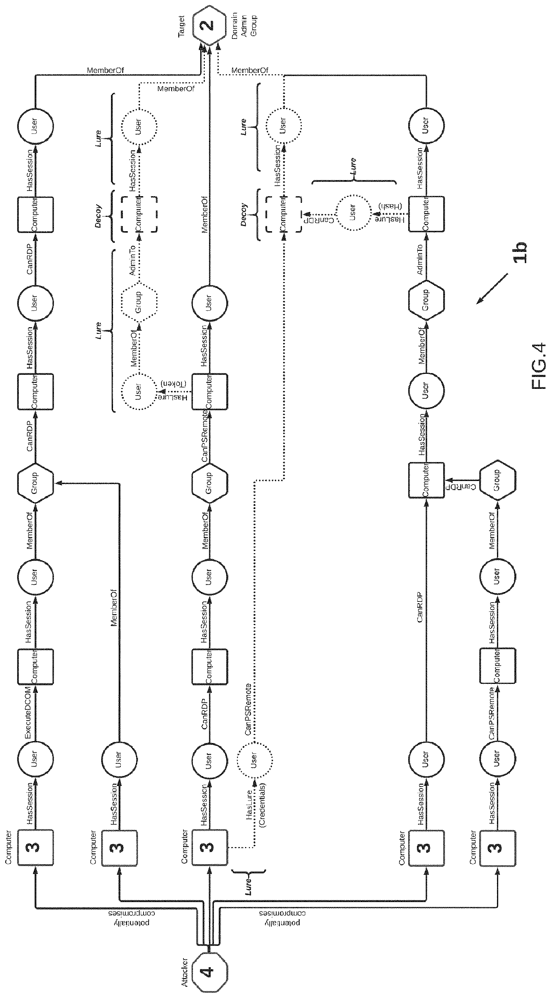

Nach der Erstellung des Angriffsgraphen werden anschließend die zur Verfügung stehenden Decoys (gestrichelte Linien) und Lures (gepunktete Linien) ermittelt. Die Decoys und Lures werden auf Basis der erfindungsgemäßen Zielfunktion und deren Vorgaben verteilt. Mögliche daraus resultierende Angriffsgraphen 1a, 1b sind in Figur 3 und 4 dargestellt. Dringt ein Angreifer 4 nun über eine der die möglichen Angriffspunkte darstellenden Quellen 3 ins Netzwerk ein, wird der Angriff detektiert, wenn der Angreifer 4 auf eines der ausgebrachten Decoys trifft und somit "in die Falle" geht.

Erfindungsgemäß wird der jeweils entstandene Angriffsgraph anhand der Zielfunktion bewertet.

Für die hier aus Gründen der Übersichtlichkeit vereinfachten Angriffsgraphen haben Kanten gleiche Kosten und die Detektion erfolgt nur auf den Decoys.

Die Zielfunktion ist beispielsweise wie folgt definiert:

$$\max A*N_{sd} + B*N_{md} + N_{rd} - N_p - E + M_p - M_d - M_{sl} - M_{sd}$$

mit

$N_{sd}$     Anzahl der Pfade mit Decoys, die kürzer sind als der kürzeste Pfad ohne Decoys.

$A$     Gewichtungsfaktor

$N_{md}$     Anzahl der Pfade mit Decoys, die kürzer sind als die mittlere Pfadlänge und größer gleich der minimalen Pfadlänge der Pfade ohne Decoys.

$B$     Gewichtungsfaktor
$N_p$     Anzahl der Pfade ohne Decoys
$N_d$     Anzahl der Pfade mit Decoys
$N_{rd}$     $N_p - N_{sd} - N_{md}$ (verbleibenden Pfade mit Decoys)
$E$     Anzahl möglicher Angriffspunkte
$M_p$     Ø-Länge der Pfade ohne Decoy
$M_d$     Ø-Länge der Pfade mit Decoy
$M_{sl}$     Ø-Distanz Lures zu Angriffspunkten
$M_{sd}$     Ø-Distanz Decoys zu Angriffspunkten

Für die Varianten nach Figur 3 und Figur 4 ergeben sich somit die folgenden Zielfunktionswerte, wobei die Gewichtungsfaktoren auf A = 10 und B = 2 festgelegt wurden:

Variante aus Figur 3:

$$10*3 + 2*0 + 1 - 5 - 5 + 9 - 6{,}75 - 2{,}75 - 4{,}00 \quad = \quad 16{,}50$$

Variante aus Figur 4:

$$10*1 + 2*0 + 1 - 5 - 5 + 9 - 9{,}75 - 4{,}25 - 7{,}75 \quad = \quad -11{,}75$$

Somit ergibt sich anhand der Bewertung, dass die in Figur 3 dargestellte Variante effizienter ist, weil die der Angreifer auf mehr Pfaden - also mit höherer Wahrscheinlichkeit - und früher entdeckt wird, weil die Decoys näher an den Quellen 3 als mögliche Angriffspunkte platziert sind.

**Patentansprüche**

1.  Verfahren für die Verbesserung der Sicherheit eines elektronischen Kommunikationsnetzes unter Verwendung einer Deception-Technologie, bei dem Lures und Decoys im Kommunikationsnetz verteilt werden, um einen Angreifer im Kommunikationsnetz zu detektieren,
    **dadurch gekennzeichnet, dass**

    - ein Angriffsvektor auf das Kommunikationsnetzwerk ermittelt wird,
    - ein Angriffsgraph (1) basierend auf dem Angriffsvektor erstellt wird, welcher mögliche Angriffspunkte darstellt und Angriffswege als azyklischen, gerichteten Graphen mit mindestens einer das Angriffsziel darstellenden Senke (2) und mindestens einer den jeweiligen Angriffspunkt darstellenden Quelle (3) abbildet,
    - die Art und die Anzahl von Lures und Decoys basierend auf der Struktur des Angriffsgraphen (1) bestimmt werden und
    - die Lures und die Decoys unter Verwendung einer Zielfunktion im Kommunikationsnetz verteilt werden, wobei die Zielfunktion folgende Vorgaben berücksichtigt:

    a) kürzere Pfade zu dem Angriffsziel oder den Angriffszielen des Angriffsgraphen (1) sind für Angreifer (4) besonders attraktiv,
    b) auf möglichst vielen Pfade zu dem Angriffsziel oder den Angriffszielen des Angriffsgraphen (1) ein Decoy platziert ist,
    c) die Lures und Decoys sind möglichst nah an den Angriffspunkten des Angriffsgraphen (1) angeordnet sind,

    wobei durch die Verteilung der Lures und Decoys ein neuer Angriffsgraph (1a,1b) gebildet wird und
    wobei anschließend ein Vergleich des ursprünglichen Angriffsgraphs (1) mit dem neu gebildeten Angriffsgraphen (1a, 1b) durchgeführt und die Veränderung anhand des Zielfunktionswertes bewertet wird.

2.  Verfahren nach Anspruch 1, **dadurch gekennzeichnet, dass**
    mindestens zwei Angriffsvektoren festgelegt werden, aus denen jeweils ein Angriffsgraph (1) erstellt wird und die Platzierung der Lures und Decoys in den jeweiligen Angriffsgraphen (1) überlagert wird.

3.  Verfahren nach Anspruch 1 oder 2, **dadurch gekennzeichnet, dass**
    d) die Komplexität der Ausbringung von Lures und Decoys als weitere Vorgabe in der Zielfunktion Anwendung findet.

4.  Verfahren nach einem der vorgenannten Ansprüche, **dadurch gekennzeichnet, dass** mehrere Iterationen des Verfahrens nach Anspruch 1 durchlaufen werden.

5.  Verfahren nach einem der vorgenannten Ansprüche, **dadurch gekennzeichnet, dass** Machine-Learning-Verfahren bei der Durchführung des Verfahrens eingesetzt werden.

**Claims**

1.  Method for improving the security of an electronic communication network using a deception technology, in which lures and decoys are distributed in the communication network, in order to detect an attacker in the communication network, **characterised in that**

    - an attack vector on the communication network is determined,
    - an attack graph (1) is drawn up, on the basis of the attack vector, which graph shows possible attack points and attack paths as acyclic directed graph having at least one sink (2) representing the target, and at least one source (3) representing the relevant attack point,
    - the type and the number of lures and decoys are determined on the basis of the structure of the attack graph (1), and
    - the lures and decoys are distributed in the communication network using a target function, wherein the target function takes into account the following parameters:

a) shorter paths to the target or the targets of the attack graph (1) are particularly attractive for attackers (4),
b) a decoy is placed on as many paths as possible to the target or the targets of the attack graph (1),
c) the lures and decoys are arranged as close as possible to the attack points of the attack graph (1),

wherein a new attack graph (1a, 1b) is created by the distribution of the lures and decoys, and
wherein subsequently a comparison of the original attack graph (1) with the newly created attack graph (1a, 1b) is carried out, and the change is assessed on the basis of the target function value.

2. Method according to claim 1, **characterised in that**
at least two attack vectors are specified, from which in each case one attack graph (1) is drawn up, and the positioning of the lures and decoys in the respective attack graphs (1) is overlaid.

3. Method according to either claim 1 or claim 2, **characterised in that**
d) the complexity of the application of lures and decoys is used as a further parameter in the target function.

4. Method according to any of the preceding claims, **characterised in that** a plurality of iterations of the method according to claim 1 are passed through.

5. Method according to any of the preceding claims, **characterised in that** machine learning methods are used when carrying out the method.

**Revendications**

1. Procédé d'amélioration de la sécurité dans un réseau électronique de communication en utilisant une technologie de deception, dans lequel des lures et des decoys sont répartis dans le réseau de communication afin de détecter un attaquant dans le réseau de communication,
**caractérisé en ce que**

- un vecteur d'attaque sur le réseau de communication est déterminé,
- un graphe d'attaque (1) est créé sur la base du vecteur d'attaque,
qui représente des points d'attaque possibles et les voies d'attaque sous la forme d'un graphe acyclique orienté avec au moins un creux (2) représentant la cible d'attaque et au moins une source (3) représentant le point d'attaque respectif,
- le type et le nombre des lures et des decoys sont déterminés en fonction de la structure du graphe d'attaque (1) et
- les lures et les decoys sont répartis dans le réseau de communication à l'aide d'une fonction cible, la fonction cible tenant compte des critères suivants:

a) les chemins les plus courts vers la ou les cibles d'attaque du graphe d'attaque (1) sont particulièrement intéressants pour des attaquants (4),
b) un decoy est placé sur le plus grand nombre possible de chemins menant à la ou aux cibles d'attaque du graphe d'attaque (1),
c) les lures et les decoys sont placés le plus près possible des points d'attaque du graphe d'attaque (1),

la répartition des lures et des decoys formant un nouveau graphe d'attaque (1a, 1b) et
une comparaison est ensuite effectuée entre le graphe d'attaque initial (1) et le graphe d'attaque nouvellement formé (1a, 1b) et la modification est évaluée à l'aide de la valeur de la fonction cible.

2. Procédé selon la revendication 1, **caractérisé en ce qu'**au moins deux vecteurs d'attaque sont définis, à partir desquels un graphe d'attaque (1) est créé pour chacun d'eux, et le placement des lures et des decoys est superposé dans les graphes d'attaque respectifs (1).

3. Procédé selon la revendication 1 ou 2, **caractérisé en ce que**
d) la complexité de la pose de lures et de decoys est utilisée comme autre spécification dans la fonction cible.

4. Procédé selon l'une des revendications précédentes, **caractérisé en ce que** plusieurs itérations du procédé selon la revendication 1 sont exécutées.

5. Procédé selon l'une des revendications précédentes, **caractérisé en ce que** des procédés d'apprentissage automatique sont utilisés lors de l'exécution du procédé.

FIG.1

```
 ┌─────────────────────┐
 │   Festlegung des    │        1.Schritt
 │   Angriffsvektors   │
 └─────────────────────┘
            │
            ▼
 ┌─────────────────────┐  ┐
 │   Daten für Baseline│  │
 │   Attack Graph      │  │
 │   gemäß             │  │
 │   Angriffsvektor    │  │
 │   sammeln           │  │
 └─────────────────────┘  │
            │             ├  2.Schritt
            ▼             │
 ┌─────────────────────┐  │
 │   Baseline Attack   │  │
 │   Graph aufbauen    │  │
 └─────────────────────┘  ┘
            │
            ▼
 ┌─────────────────────┐
 │   Auswahl von       │        3.Schritt
 │   Decoys und Lures  │
 └─────────────────────┘
            │
            ▼
 ┌─────────────────────┐  ┐
 │   Nebenbedingungen  │  │
 │   festlegen         │  │
 └─────────────────────┘  │
            │             │
            ▼             │
 ┌─────────────────────┐  ├  4.Schritt
 │   Bildung der       │  │
 │   Zielfunktion      │  │
 └─────────────────────┘  │
            │             │
            ▼             │
 ┌─────────────────────┐  │
 │   Kombinatorische   │  │
 │   Optimierung       │  │
 └─────────────────────┘  ┘
            │
            ▼
      ┌──────────┐
      │ Ergebnis │              5. Schritt
      └──────────┘
```

FIG.2

FIG.3

FIG.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 9807115 B2

**In der Beschreibung aufgeführte Nicht-Patentliteratur**

- **P. AMMANN** ; **D. WIJESEKERA** ; **S. KAUSHIK**. Scalable, Graph-Based Network Vulnerability Analysis. *ACSAC*, 2002

- **R. ANCARANI**. Not All Paths are Created Equal. *Attackers' Economy (Part 1)*, 08 November 2019, https://riccardoancarani.github.io/2019-11-08-not-all-paths-are-equal